# EUROPÄISCHE PATENTANMELDUNG

(11) **EP 1 074 932 A2**
(43) Veröffentlichungstag der Anmeldung: **07.02.2001**
(21) Anmeldenummer: 00115366.7
(22) Anmeldetag: 15.07.2000
(51) Int. Cl.: G06K 7/08

(54) **Transpondersystem und Lesegerätanordnung hierfür**

(30) Priorität: 03.08.1999 DE 19935613; 24.12.1999 DE 19963150
(71) Anmelder: AEG Identifikationssysteme GmbH, 89077 Ulm (DE)
(72) Erfinder: Bloch, Werner, 73054 Eislingen (DE)
(74) Vertreter: Weber, Gerhard

(57) **Zusammenfassung**

Für ein Transpondersystem wird eine insbesondere zur Benutzung in Behälterhandhabungssystemen vorgesehene Variante vorgeschlagen, zu der besonders vorteilhafte Komponenten, insbesondere Lesegerät-Antennenanordnungen angegeben werden, deren Einsatz aber nicht auf die Behälterhandhabungssysteme beschränkt ist.

## Beschreibung

Die Erfindung betrifft ein Transpondersystem sowie Komponenten für Transpondersysteme.

In Transpondersystemen werden Daten zwischen Lesegeräten und relativ zu diesen ortsveränderlichen Transpondern berührungslos, typischerweise über elektromagnetische Wechselfelder, ausgetauscht. Die Transponder sind dabei an Objekten angebracht und ermöglichen die Identifizierung eines Objekts und/oder die Feststellung von dessen individuellen Eigenschaften anhand von in einem Transponderspeicher abrufbar gespeicherten Informationen, welche durch ein Abfragefeld eines Lesegeräts auslesbar sind. Zusätzlich zu dieser Auslesbarkeit kann der Inhalt des Transponderspeichers auch in einem Schreibvorgang durch das Lesegerät veränderbar sein.

Ein Einsatzfall von Transpondersystemen sind beispielsweise Behälterhandhabungssysteme, insbesondere zur Behälterleerung bei der Müllentsorgung, wobei jeder Behälter einen Transponder aufweist und die Entleerungsanlage, insbesondere ein Müllsammelfahrzeug, mit einer Lesegeräteanordnung ausgestattet ist, mittels derer der einzelne Behälter identifizierbar ist, wodurch beispielsweise die Berechtigung zur Müllanlieferung durch Zahlung entsprechender Gebühren überprüfbar ist oder je nach Vereinbarung für jede Leerung, ggf. in Abhängigkeit vom Gewicht der abgegebenen Müllmenge, eine Belastung eines Gebührenkontos erfolgt. Auch bei solchen Systemen sind als Informationsredundanz Informationen über Leerungsdatum, Müllmenge oder ähnliches in den Transponderspeicher einschreibbar.

Der vorliegenden Erfindung liegt die Aufgabe zugrunde, derartige Transpondersysteme sowie eine Lesegeräteanordnung für Transpondersysteme zu verbessern.

Erfindungsgemässe Lösungen sind in den unabhängigen Ansprüchen beschrieben. Die abhängigen Ansprüche enthalten vorteilhafte Ausgestaltungen und Weiterbildungen.

Die Erfindung ist nachfolgend anhand einer bevorzugten Anwendung zur Datenerfassung von Müllbehältern in einem Müllbeseitigungssystem beschrieben, ohne auf diesen Anwendungsfall beschränkt zu sein.

In einem solchen an sich bekannten Müllbeseitigungssystem sind Müllbehälter mit Transponderanordnungen ausgestattet. Ein Müllfahrzeug als Behälterhandhabungsanlage weist eine Einhängevorrichtung als Haltevorrichtung auf, in welche der Müllbehälter einhängbar ist. Das Müllfahrzeug ist mit einem Lesegerät ausgestattet, welches berührungslos mit dem Transponder eines in der Einhängevorrichtung gehaltenen Müllbehälters kommuniziert und Daten aus dem Transponder ausliest und/oder in diesen einschreibt.

Bevorzugt ist die Lesegeräteanordnung mit der Haltevorrichtung fest verbunden und wird bei Schwenkung der Haltevorrichtung zur Entleerung des Müllbehälters in eine Mulde des Fahrzeugs mit der Haltevorrichtung mitbewegt. Hierdurch ist eine geringe Distanz der Lesegeräteanordnung zum Transponder des Behälters und damit eine zuverlässige Datenkommunikation gewährleistet.

Die Behälter tragen die Transponderanordnungen vorteilhafterweise an vorgegebenen Positionen und sind in eindeutiger Position in die Haltevorrichtung einhängbar, so dass eine weitgehend definierte geometrische Relation zwischen Lesegerät und Transponder eines eingehängten Behälters besteht.

Vorteilhafterweise ist das Müllfahrzeug zur Leerung unterschiedlicher Behälter vorbereitet, für welche verschiedene, an die unterschiedlichen Behälter angepasste Positionen und/oder Einrichtungen an der Haltevorrichtungen vorgesehen sind. Um Abweichungen der relativen geometrischen Lage von Transponder und Lesegerät, bedingt durch unterschiedliche Behälter und/oder verschiedene mögliche Einhängepositionen zu tolerieren, weist die Lesegeräteanordnung vorteilhafterweise eine Antennenanordnung mit wenigstens einer Flachspule auf, deren Ausdehnung in einer Richtung der Spulenfläche wesentlich grösser ist als in einer senkrecht dazu verlaufenden Richtung und insbesondere wenigstens deren 3-faches beträgt. Der Kommunikationsabstand zwischen Lesegerät und Transponder ist vorzugsweise geringer als 40 cm, insbesondere geringer als 25 cm.

Insbesondere bei der bevorzugten Anwendung ist aus Stabilitätsgründen die Haltevorrichtung vorteilhafterweise metallisch. Eine Beeinträchtigung der Kopplung zwischen Lesegerät und Transponder durch die metallische Haltevorrichtung kann vorteilhafterweise durch eine Ausführung und Anordnung des Lesegeräts gering gehalten werden, bei welcher eine Antennenspute des Lesegeräts eine Hauptmagnetfeldrichtung parallel zu einer in Spulennähe verlaufenden metallischen Fläche aufweist und zwischen Antennenspule und metallischer Fläche eine flächige Abschirmvorrichtung mit weichmagnetischem, wirbelstromfreiem Material, insbesondere Ferrit eingefügt ist. Die Antennenspule ist vorzugsweise eine Flachspulenanordnung mit im wesentlichen senkrecht zur metallischen Fläche verlaufender Spulenfläche.

Eine erfindungsgemässe Lesegeräteanordnung, die besonders vorteilhaft bei einem Transpondersystem der geschilderten Art einsetzbar ist, weist eine Antennenanordnung mit wenigstens einer flachen Sendespulenanordnung und wenigstens einer Empfangsspulenanordnung auf, wobei die Empfangsspulenanordnung aus zwei Einzelspulen besteht, welche in einer zur Fläche der Sendespulenanordnung parallelen Richtung gegeneinander versetzt und vorzugsweise in dieser Richtung auch voneinander beabstandet sind. Die Einzelspulen sind elektrisch parallel geschaltet und bezüglich der Sendespule so positioniert, dass ein durch das Sendesignal der Sendespulenanordnung unmittelbar, d. h. ohne Gegenwart eines Transponders, in den Spulen der Empfangsspulenanordnung induzierter Signalanteil zu Null kompensiert ist, Vorzugsweise sind beide Spulen für sich in diesem Sinne kompensiert. Eine solche Kompensation ist auf einfache Weise dadurch erreichbar, dass die Einzelspulen vor Festlegung ihrer endgültigen Position bezüglich der Sendespulenanordnung noch in geringem Umfang verschiebbar sind und unter Abgabe eines Sendesignals eine Position so gesucht wird, dass im Empfangssignal eine optimale Kompensation gemessen werden kann.

Eine Kompensation aus Einzelspule ist insbesondere dadurch erreichbar, dass die Wicklung der Sendespule über der Fläche der Einzelspule verläuft und in verschiedenen Teilflächen der Einzelspule der magnetische Fluss gegensinnig gerichtet und sich insgesamt aufhebt. Die Spulenflächen der Einzelspulen sind vorzugsweise klein gegen die Fläche der Sendespulenanordnung.

Die Abmessung der Antennenanordnung ist vorteilhafterweise in einer ersten Richtung wesentlich grösser als in einer zweiten dazu senkrechten Richtung. Hierdurch kann vorteilhaft einer Situation Rechnung getragen werden, in welcher die Positionen der Transponderanordnungen von Behältern in der Haltevorrichtung bezüglich der Position des Lesegeräts aufgrund unterschiedlicher Behältertypen und/oder aufgrund verschiedener möglicher Haltepositionen insbesondere in einer Richtung stärker variieren können. Die Richtung der grösseren Erstreckung der Antennenanordnung ist vorteilhafterweise parallel zu der Richtung der Variation der Transponderposition.

Vorteilhafterweise ist der Durchmesser der Spulenfläche der Sendespulenanordnung in einer, insbesondere der vorstehend genannten Richtung grösser als in einer dazu senkrechten Flächenrichtung. Der Erfassungsbereich ist dadurch in einer Richtung ausgedehnt.

Die Empfangsspulenanordnung kann gemäss einer vorteilhaften ersten Ausführungsform gegen die Sendespulenanordnung in Richtung der Flächennormalen der flachen Sendespule versetzt angeordnet sein. Dies ist insbesondere von Vorteil bei einer ersten Feldvariante eines Transpondersystems, bei welcher Hauptmagnetfeldrichtungen von Sendespulenanordnung und Empfangsspulenanordnung parallel ausgerichtet sind. Die Einzelspulen der Empfangsspulenanordnung sind vorzugsweise zumindest annähernd an entgegengesetzten Flächenrändern der Fläche der Sendespulenanordnung insbesondere mit dieser überlappend angeordnet. Eine Kompensationsoptimierung ist insbesondere durch Spulenjustierung parallel zu den Spulenflächen möglich.

Bei einer anderen vorteilhaften Feldvariante sind die Hauptmagnetfeldrichtungen von Sendespulenanordnung und Empfangsspulenanordnung orthogonal ausgerichtet. Die Hauptmagnetfeldrichtungen der Empfangsspulen können insbesondere zumindest annähernd in der Spulenfläche der flachen Sendespule liegen. Die Empfangsspulenanordnung kann vorteilhafterweise von der Sendespule umgeben sein. Die Einzelspulen können vorteilhafterweise wiederum als Flachspulen ausgeführt sein mit untereinander parallelen Hauptmagnetfeldrichtungen. Die Spulenflächen der Einzelspulen liegen vorzugsweise in einer gemeinsamen Ebene. Die Sendespulen können dabei vorteilhafterweise aus der Flächenmitte der Sendespule heraus zum Rand hin versetzt und insbesondere nahe den Spulenwicklungen der Sendespule angeordnet sein. Der Versatz aus der Flächenmitte ist vorzugsweise für beide Einzelspulen in gleicher Richtung.

Die Funktionen und Anordnungen von Sendespulenanordnung und Empfangsspulenanordnung können nach dem Reziprozitätsprinzip vertauscht sein.

Die Erfindung ist nachfolgend anhand bevorzugter Beispiele unter Bezugnahme auf die Abbildungen noch eingehend veranschaulicht. Dabei zeigt
- Fig. 1: eine Querschnitt durch eine Lesegerätanordnung
- Fig. 2: eine Antennenanordnung mit Elektronik
- Fig. 3: einen Schnitt durch die Anordnung nach Fig. 2
- Fig. 4: einen Teil einer Behälterleerungsvorrichtung
- Fig. 5: die Anordnung von Fig. 4 in Seitenansicht
- Fig. 6: einen Schnitt durch eine bevorzugte Ausführung einer Lesegerätanordnung
- Fig. 7: eine Aufsicht auf ein Gehäuse zu Fig. 6
- Fig. 8: eine Seitenansicht der Antennenanordnung nach Fig. 6
- Fig. 9: eine Transponderposition relativ zum Lesegerät

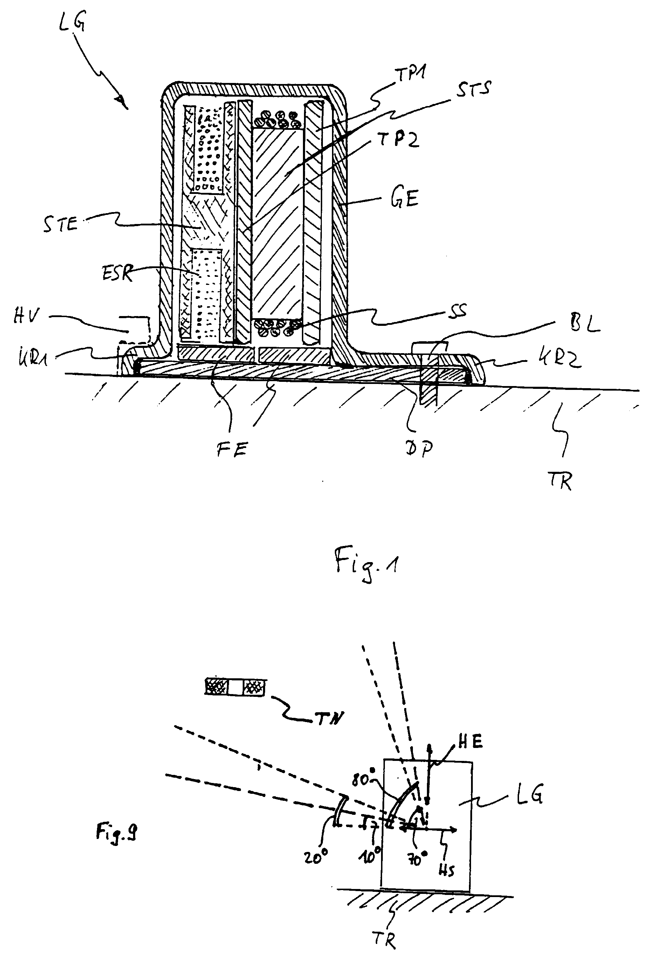

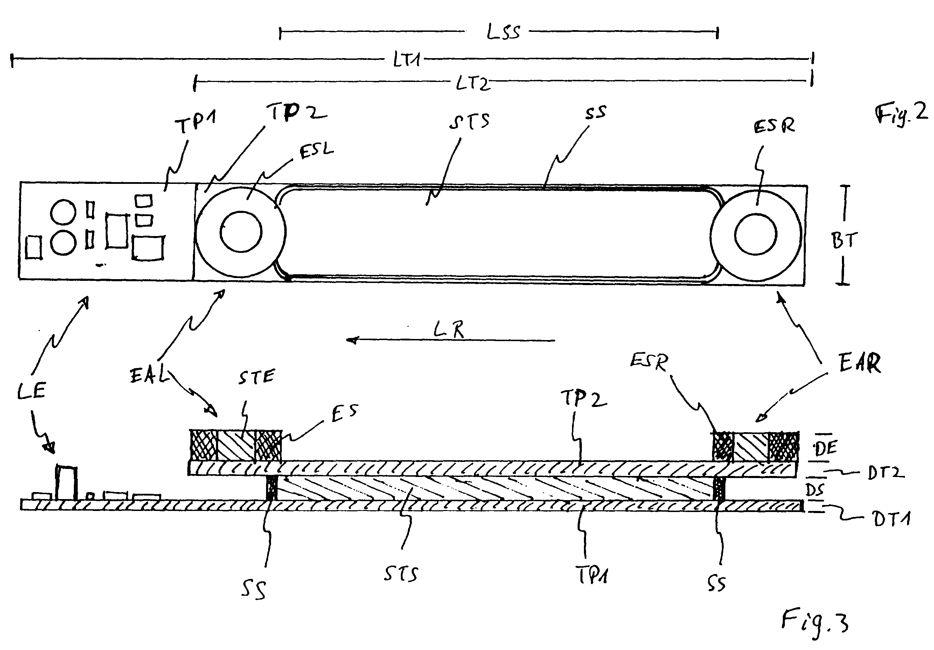

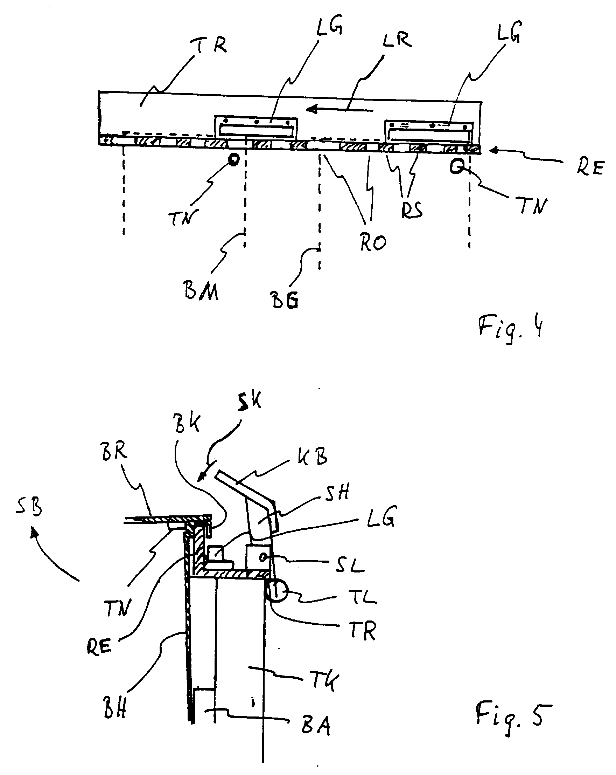

Die in Fig. 1 skizzierte Lesegerätanordnung LG zeigt einen Querschnitt durch ein Lesegerät, welches gemäss einer bevorzugten Ausführungsform eine sich senkrecht zur Zeichenebene erstreckende längliche Form aufweist. Die in dem Lesegerät bevorzugt enthaltene Antennenanordnung ist in anderen Ansichten noch in den Fig.2 und 3 skizziert.

In einem becherförmigen Gehäuse, welches aus dielektrischem Material, beispielsweise Kunststoff besteht, ist eine Antennenanordnung mit mehreren Antennenspulen untergebracht. Das Gehäuse weist vorzugsweise nach einer Seite, im Beispielsfall nach unten eine Öffnung auf, welche durch eine Deckplatte DP verschliessbar ist. Die Deckplatte kann insbesondere mit dem becherförmigen Gehäuse verklebt sein und den Innenraum des Gehäuses hermetisch abschliessen, was insbesondere für Einsatzfälle in mit Feuchtigkeit und Schmutz beaufschlagter Umgebung zum Schutz der im Gehäuse befindlichen Komponenten vorteilhaft ist. Das Gehäuse zeigt nach einer oder vorzugsweise beiden Seiten, insbesondere umlaufend einen Randbereich, welcher durch eine Abkragung eine Umfassung für die Deckplatte DP bildet. Der Randbereich kann insbesondere vorteilhaft für die Befestigung der Lesegerätanordnung auf einer Tragplatte TR dienen, wofür in den Randbereich eine oder vorzugsweise mehrere Öffnungen eingebracht sein können, durch welche Befestigungsmittel hindurch bis zu der Tragplatte reichen können. Eine Befestigung kann auch dadurch vorteilhaft erfolgen, dass ein solcher Randbereich einen Vorsprung HV, welcher senkrecht zur Montagefläche der Tragplatte beabstandet ist, hintergreift. Im skizzierten Beispiel sind beide Befestigungsvarianten kombiniert in der Weise, dass ein schmaler Randbereich KR1 einen Haltevorsprung HV hintergreift und in einem auf der anderen Gehäuseseite anstehenden breiten Randbereich KR2 Befestigungsmittel BL durch Öffnungen in diesem Randbereich hindurchgreifen.

Die Tragplatte TR kann in einem einfachen Fall aus dielektrischem, insbesondere auch nichtmagnetischem Material bestehen. Häufig sind aus Gründen mechanischer Festigkeit derartige Tragplatten aus Metall, insbesondere aus Stahl und somit sowohl elektrisch leitfähig als auch häufig weichmagnetisch, so dass solche Träger in erheblichem Mass den Betrieb eines Lesegeräts in einer solchen Anordnung beeinträchtigen können. Insbesondere für derartige Einsatzfälle ist eine Ausführungsform einer Antennenanordnung besonders vorteilhaft, welche zwischen Antennenspulen SS, ESR (und ESL, Fig.2 und 3) der Antennenanordnung im Lesegerät und der metallischen Tragplatte eine flächige Abschirmvorrichtung, insbesondere aus weichmagnetischem, wirbelstromfreiem Material , vorzugsweise Ferrit FE aufweist. Zur Vermeidung mechanischer Spannungen, insbesondere bei Temperaturwechseln, und damit verbundener Bruchgefahr spröden Ferritmaterials ist die flächige Abschirmung in eine Mehrzahl von Teilflächen in Form von eng aneinander anschliessenden flachen Teilstücken nach Art eines regelmässigen Mosaiks aufgeteilt. Die Abschirmung erstreckt sich im wesentlichen über die Flächenprojektion der Spulenanordnung senkrecht auf die Tragplatte TR. Die Abschirmvorrichtung ist vorteilhafterweise zwischen Spulenanordnung und Deckplatte DP angeordnet. In dem Lesegerätgehäuse ist vorzugsweise auch noch die Elektronik des Lesegeräts oder zumindest wesentliche Teile derselben enthalten. Die mehreren Komponenten im Gehäuse GE sind vorzugsweise durch Vergiessen in ihrer relativen Lage und im Gehäuse erschütterungssicher fixiert und durch den Verguss zugleich gegen Umwelteinflüsse passiviert. In der Wandung des Gehäuses GE ist vorzugsweise noch eine nicht in der Skizze enthaltene elektrische Durchführung, insbesondere in Form einer Steckkontaktverbindung in einen Wandungsdurchbruch eingefügt und dicht gegen den Wandungsdurchbruch abgeschlossen. Über die elektrische Durchführung kann Betriebsleistung für das Lesegerät zugeführt werden und ein Datenaustausch mit Steuer- und Auswerteeinrichtungen stattfinden.

Die Fig. 2 und 3 zeigen eine vorteilhafte Antennenanordnung für Transpondersysteme. Die Antennenanordnung enthält eine Sendespule SS in Form einer flachen Ringspule. Die Sendespule SS ist um einen Sendespulenträger STS gewickelt und zeigt eine langgestreckte Form. Der Spulenträger STS ist zwischen zwei langgestreckten Trägerplatten TP1 und TP2 angeordnet und, wobei die Trägerplatte TP2 auf der der Sendespule abgewandten Fläche zwei beabstandete Empfangsantennen ESR und ESL trägt. Eine der Trägerplatten, im Beispiel die Trägerplatte TP1, ist über die für die Spulenanordnung benötigte Länge LT2 hinaus auf eine Gesamtlänge LT1 verlängert und trägt die Elektronik LE des Lesegeräts oder zumindest einen Teil derselben.

Die in Fig. 2 ersichtliche Breite der Sendespule SS quer zur Längsrichtung LR in der aufgespannten Spulenfläche ist im wesentlichen gleich der Breite der Trägerplatte(n) TP1, TP2. Die Länge LSS der Sendespule SS in der Spulenfläche in Längsrichtung LR ist wesentlich grösser als die Spulenbreite und beträgt vorzugsweise wenigstens das 3-fache, insbesondere wenigstens das 5-fache davon. Die Höhe DS der Spule senkrecht zu Spulenfläche und Trägerplattenfläche ist vorzugsweise gering gegen die Spulenbreite und die Spulenlänge. Beispielsweise liegt die Breite der Sendespule (und der Trägerplatten) in der Grösse von BT=40-50 mm, die Spulenlänge in der Grösse von LSS=200-400 mm und die Spulenhöhe in der Grösse von DS=10 mm. Die Dicke der Trägerplatten richtet sich primär nach den mechanischen Eigenschaften des Plattenmaterials und den mechanischen Anforderungen des Aufbaus ist vorzugsweise möglichst gering. Die radiale Ringdicke der Ringspule SS ist gering gegen die Querabmessungen der Spulenfläche.

Die Empfangsspulen ESR, ESL sind vorzugsweise als flache Ringspulen mit hoher Windungszahl und damit relativ grosser radialer Ringdicke (vgl. Fig. 1) ausgeführt und jeweils auf Empfangsspulenträger STE gewickelt. Die Empfangsspulen sind durch die Anordnung auf der der Sendespule gegenüberliegenden Fläche der Trägerplatte TP2 mit ihren Spulenflächen gegen die Spulenfläche der Sendespule senkrecht zu den Spulenflächen versetzt. Der Versatz ermöglicht eine Überlappung der Spulenbereiche von Empfangsspulen einerseits und Sendespule andererseits.

Bei einer vorteilhaften Ausführung einer Antennenanordnung für ein Lesegerät sind die Empfangsspulen elektrisch parallel geschaltet, so dass sich die durch parallele magnetische Flüsse durch die beiden Empfangsspulen induzierten Spannungen addieren im Unterschied zu der üblichen Differenzsignalauswertung mit elektrisch gegensinnig verschalteten Empfangsspulen. Die Empfangsspulen sind dann in Längsrichtung LR im Randbereich der Sendespule so positioniert, dass sich die durch das von der Sendespule ohne Transpondereinfluss erzeugte Feld induzierten Spannungen im Empfangssignal kompensieren. Vorzugsweise wird eine solche Sendefeldkompensation für jede der Empfangsspulen getrennt durchgeführt. Die additive Zusammenfassung vermeidet ein Empfindlichkeitsminimum in einer Mittelebene zwischen den Empfangsspulen und führt daher zu einem breiten Überwachungsraum in Längsrichtung mit geringen Empfindlichkeitsschwankungen.

Dies ist insbesondere vorteilhaft für Anwendungen, bei welchen Transponderlagen in mehreren in Längsrichtung unterschiedlichen Positionen zulässig sind, ohne dass eine Bewegung des Objekts mit dem Transponder in dieser Längsrichtung vorgesehen ist. Die langgestreckte Antennenanordnung mit additiver Verknüpfung der Empfangsspannungen kann auch für parallel zur Längsrichtung der Antenne bewegten Objekten, insbesondere mit definierter Objektlage quer zur Längsrichtung, beispielsweise bei Objekten auf einer Bahnfördereinrichtung wie einem Förderband oder dgl. vorteilhaft sein, wo dadurch eine grosse Lesedauer mit weitgehend gleichbleibender Empfindlichkeit ermöglicht ist.

Die Empfangsspulen können in Längsrichtung LR und quer dazu in der Spulenfläche ähnliche Abmessungen aufweisen und beispielsweise wie skizziert als kreisförmige Spulen ausgeführt sein Die Höhe DE der Empfangsspulen senkrecht zur Spulenfläche bzw. zur Fläche der Trägerplatte TP2 ist vorzugsweise gering gegen die Querabmessungen der Empfangsspulen, die vorteilhafterweise annähernd gleich der Breite BT der Trägerplatte TP2 sind. In Fig. 2 ist die Sendespule, die in dieser Ansicht eigentlich durch die Trägerplatte TP2 verdeckt wäre, der Anschaulichkeit halber mit eingezeichnet.

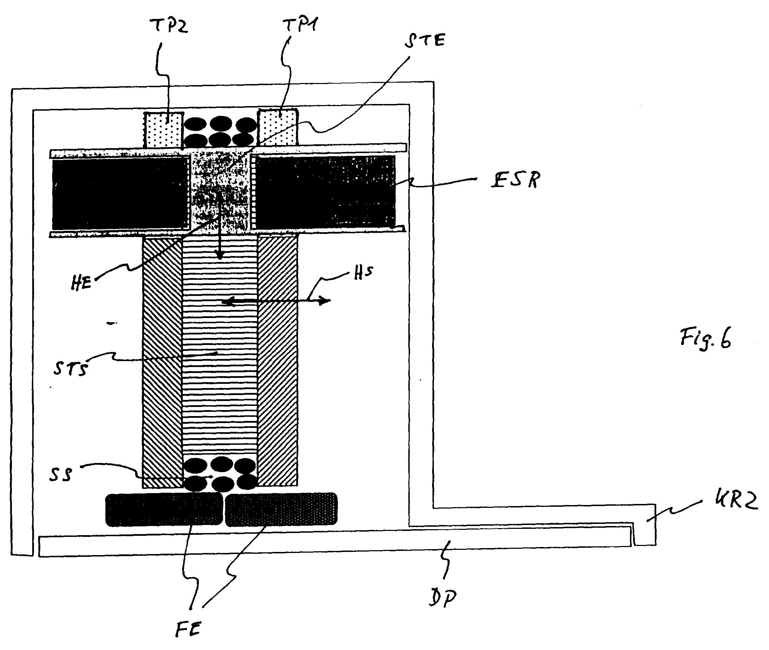

Fig. 4 und Fig. 5 zeigen einen Ausschnitt aus einem Transpondersystem im Rahmen einer Behälterhandhabung, insbesondere einer Müllbehälterentleerung mittels eines Müllsammelfahrzeugs. Solche Fahrzeuge weisen typischerweise eine Einhängeeinrichtung für Müllbehälter auf, welche in entsprechend vorbereitete Gegeneinrichtungen der Müllbehälter eingreifen. Die Müllbehälter gelangen dabei in zumindest annähernd definierte Positionen bezüglich der Einhängeeinrichtungen. Die Müllbehälter seien mit Transponderanordnungen in definierter Position innerhalb des Behälteraufbaus ausgestattet, beispielsweise innerhalb eines nach unten abgekragten Behälterrandes. In Fig. 5 ist beispielsweise ein Ausschnitt eines Müllbehälters BH skizziert, dessen oberer Behälterrand BR an der Aussenkante eine nach unten weisende Abkragung BK aufweist. Innerhalb dieser Abkragung ist ein Transponder TN geschützt untergebracht. Die Abkragung dient zugleich dazu. Den Behälter in einer Einhängeeinrichtung mit einer im wesentlich vertikal nach oben weisenden Leiste RE zu halten, wobei der Behälter an einer tieferliegenden Stelle gegen eine Behälterabstützung einer die Einhängeeinrichtung tragenden Tragkonstruktion TK abgestützt ist. Der eingehängte Behälter ist über einen Haltebügel KB, der an einem Schwenkhebel SH um ein Schwenklager SL in Schwenkrichtung SK auf den Behälterrand verschwenkbar ist. in seiner Position bezüglich der Tragkonstruktion festlegbar. Die Tragkonstruktion ist als ganzes um eine Welle TL in Kipprichtung SB nach oben kippbar, wobei der Behälter in bekannter Weise mit nach unten weisender Öffnung über eine Aufnahmemulde des Sammelfahrzeugs gelangt und der Müll aus dem Behälter in die Mulde fällt.

Die Einhängeeinrichtung RE steht von der Fläche einer Tragplatte TR der Tragkonstruktion nach oben ab. Eine Lesegerätanordnung LG ist, vorzugsweise in enger Nachbarschaft zu der Einhängeeinrichtung RE, auf der nach oben weisenden Fläche der Tragplatte befestigt, wobei bei bevorzugter Verwendung einer Antennenanordnung der vorstehend anhand der Fig. 1 bis Fig. 3 beschriebenen Art bzw. einer eine solche enthaltenden Lesegerätanordnung die Spulenflächen der Antennenanordnung senkrecht zur Zeichenebene der Fig. 5 und senkrecht zur Montagefläche der Tragplatte TR ausgerichtet sind. Die Längsrichtung einer nach Fig. 1 bis Fig. 3 langgestreckten Antennenanordnung steht senkrecht auf der Zeichenebene der Fig. 5.

Die Einhängeeinrichtung RE ist mit ihrer oberen Kante nicht durchgehend, sondern weist eine Mehrzahl von Unterbrechungen RO (Fig. 4) auf, durch welche die umlaufende, nach unten weisende Abkragung BK des Behälters durchgeführt ist. Die verbleibenden Stege RS können dabei auch in Längsrichtung kürzer sein als die Unterbrechungen RO. Durch die Mehrzahl der Unterbrechungen RO ist die Einhängeeinrichtung RE vorbereitet zur Aufnahme von Behältern unterschiedlicher Grösse, was in Fig. 4 durch die mit unterbrochener Linie angedeuteten Umrisse eines grösseren Behälters BG und eines kleineren Behälter BM veranschaulicht ist. Durch die verschiedenen Behältergrössen und die mehreren Einhängemöglichkeiten ist in begrenztem Umfang eine Variation der Transponderposition in Längsrichtung gegeben. Die langgestreckte Ausführung der Antennenanordnung mit der durch die additive Kombination der Empfangssignale aus den in Längsrichtung LR beabstandeten Empfangsspulen erreichten gleichmässigen Empfindlichkeit in einem grösseren Längsrichtungsbereich ergibt sich unabhängig von den jeweiligen Behältergrössen ein zuverlässiger Datenaustausch zwischen Transponder und Lesegerät. In dem in Fig. 4 skizzierten Beispiel kann die Einhängeeinrichtung mehr als einen Behälter gleichzeitig aufnehmen und dementsprechend sind mehrere Lesegerätanordnungen in Längsrichtung aufeinanderfolgend vorgesehen, welche unterschiedliche zulässige Längsrichtungsabschnitte für Transponderpositionen abdecken. Die Transponder TN der eingehängten Behälter BG und BM sind eingezeichnet.

Die in Fig. 6 bis Fig. 8 skizzierte bevorzugte Ausführungsform einer Lesegerätanordnung unterscheidet sich von der zuvor beschriebenen vor allem durch den veränderten Aufbau der Antennenanordnung. Insbesondere ist wesentlich, dass die Hauptmagnetfeldrichtungen HS von Sendespulenanordnung einerseits und HE von Empfangsspulenanordnung ESR, ESL andererseits zumindest annähernd senkrecht aufeinander stehen. Für die Einbettung einer grossflächigen Sendespulenanordnung SS zwischen zwei langgestreckten Trägerplatten TP1, TP2 wird auf die Ausführungen zu dem Beispiel nach Fig. 1 bis Fig. 3 verwiesen, ebenso hinsichtlich des prinzipiellen Aufbaus des die Antennenanordnung umgebenden Gehäuses und die Ferrit-Abschirmung FE.

Die Empfangsspulen sind senkrecht zur Fläche der Sendespule so justiert, dass das Magnetfeld der Sendespule, welches trotz der orthogonalen Ausrichtung der Hauptmagnetfeldrichtungen von Empfangsspulen und Sendespule in Form gekrümmter Randfelder eine Signalkomponente in den Empfangsspulen induzieren kann, zu Null kompensiert ist. Da die Signalinduktion durch die orthogonale Ausrichtung von vornherein schwach ist, ist eine Kompensation bei dieser bevorzugten Ausführungsform besonders gut einstellbar.

Es zeigt sich ferner, dass vorteilhafterweise die Kopplung des Transponder eines in der Haltevorrichtung gehaltenen Behälters im Mittel deutlich besser ist und innerhalb der zulässigen Variationen der Transponderposition relativ zum Lesegerät geringeren Schwankungen unterworfen ist. Die relative Position des Transponders TN liegt vorzugsweise in einem Winkelbereich von wenigstens 10 °, insbesondere wenigstens 20 ° und höchstens 80 °, insbesondere höchstens 70 ° von der Hauptmagnetfeldrichtung HS der Sendespule in Richtung der Hauptmagnetfeldrichtung HE der Empfangsspulen (Fig. 9).

Die Empfangsspulen ESR, ESL können in der bevorzugten Ausführungsform günstigerweise innerhalb der von der Sendespule umgrenzten Fläche angeordnet sein, wodurch bei gleicher Gesamtlänge und Höhe der Antennenanordnung die Sendespule grösser ausgeführt sein kann. Die Empfangsspulen sind vorteilhafterweise wieder in Richtung der grössten Ausdehnung der Sendespulenfläche beabstandet und in die Nähe des Randes der Sendespulenfläche in dieser Richtung gerückt. Insbesondere bei Montage der Lesegerätanordnung über einer metallischen Fläche in der bereits geschilderten Weise, dass die Sendespulenfläche senkrecht auf der metallischen Fläche steht und der grösste Durchmesser der Sendespulenfläche im wesentlichen parallel zu der metallischen Fläche verläuft, ist es zur Minimierung eventueller durch die metallische Fläche verursachter Beeinträchtigung der Feldkopplung neben der Einfügung des weichmagnetischen Abschirmmaterials FE vorteilhaft, die Empfangsspulen ESR, ESL aus einer Mittenebene der Sendespulenanordnung in gleiche Richtung von der metallischen Fläche weg zum Rand der Sendespulenfläche hin versetzt anzuordnen. Um die Empfangsspulen ESR, ESL innerhalb der von der Sendespule SS aufgespannten Fläche anzuordnen, weisen die Trägerplatten TP1, TP2, wie in Fig. 8 skizziert, Aussparungen AS auf.

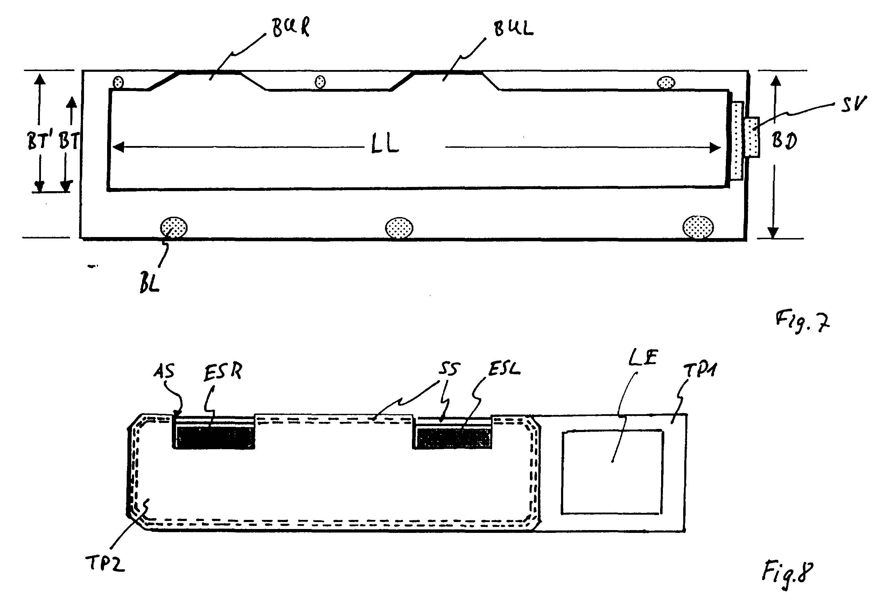

Durch die Querausrichtung der Empfangsspulen bezüglich der Sendespulenfläche beansprucht die Antennenanordnung im Bereich der Empfangsspulen eine grössere Breite in Richtung der Flächennormalen der Sendespulenfläche. In der Gestaltung des Gehäuses des Lesegeräts wird dies wie aus Fig. 7 ersichtlich vorteilhafterweise in der Art berücksichtigt, dass der Topf des Gehäuses von einer geringeren Breite BT in seinem überwiegenden Bereich in Richtung seiner grössten Erstreckung LL in den Abschnitten der Empfangsspulen durch Ausbuchtungen BUR, BUL, welche bis an den Rand der Deckplatte DP reichen können, auf eine grössere Breite BT aufgeweitet ist. In den Abschnitten der geringeren Topfbreite BT verbleibt ein ausreichender Kragen KR1, wie er zu Fig. 1 bereits erläutert wurde. An einer Stirnseite des Gehäuses ist in Fig. 7 eine in der Gehäusewand befestigte Steckverbindung SV eingezeichnet.

Die vorstehenden und in den Ansprüchen angegebenen Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Transpondersystem für ein Behälterhandhabungssystem, bei welchem eine Mehrzahl von Behältern mit je einer Transponderanordnung und eine Behälterhandhabungsanlage mit einer Lesegerätanordnung ausgestattet sind, wobei die Behälter mit einer Haltevorrichtung der Behälterhandhabungsanlage in Eingriff bringbar sind, die Lesegerätanordnung im Bereich der Haltevorrichtung angeordnet ist und berührungslos mit dem Transponder eines Behälters in der Haltevorrichtung kommuniziert.

2. Transpondersystem nach Anspruch 1, dadurch gekennzeichnet, dass die Haltevorrichtung samt Behälter beweglich ist und die Lesegerätanordnung mit bewegt ist.

3. Transpondersystem nach Anspruch 1 oder 2, dadurch gekennzeichnet, dass unterschiedliche Behälter handhabbar sind und für den Eingriff eines Behälters verschiedene Positionen an der Haltevorrichtung vorgesehen sind.

4. Transpondersystem nach einem der Ansprüche 1 bis 3, dadurch gekennzeichnet, dass die Lesegerätanordnung eine Antennenanordnung mit wenigstens einer Flachspule enthält, deren Ausdehnung in einer Richtung der Spulenfläche wenigstens das 3-fache ihrer Ausdehnung in der dazu senkrechten Richtung in der Spulenfläche beträgt.

5. Transpondersystem nach einem der Ansprüche 1 bis 3, dadurch gekennzeichnet, dass die Haltevorrichtung aus Metall besteht.

6. Transpondersystem nach einem der Ansprüche 1 bis 5, dadurch gekennzeichnet, dass die Lesegerätanordnung wenigstens eine erste Antennenspule mit einer Hauptmagnetfeldrichtung parallel zu einer metallischen Fläche der Haltevorrichtung umfasst und zwischen Antennenspule und metallische Fläche eine flächige Abschirmvorrichtung mit weichmagnetischen, wirbelstromfreiem Material, insbesondere Ferrit eingefügt ist.

7. Transpondersystem nach Anspruch 5, dadurch gekennzeichnet, daß die erste Antennenspule eine Flachspulenanordnung mit im wesentlichen senkrecht zur metallischen Fläche verlaufender Spulenfläche ist.

8. Transpondersystem nach einem der Ansprüche 1 bis 7, dadurch gekennzeichnet, dass der Kommunikationsabstand von Lesegerätanordnung und Transponderanordnung eines Behälters kleiner als 40 cm ist.

9. Transpondersystem nach einem der Ansprüche 1 bis 8, dadurch gekennzeichnet, dass die Behälter Müllbehälter sind und die Behälterhandhabungsanlage eine Behälterleerungsanlage, insbesondere an einem Müllsammelfahrzeug ist.

10. Lesegerätanordnung mit einer Antennenanordnung mit wenigstens einer flachen Sendespulenanordnung und wenigstens einer Empfangsspulenanordnung, wobei die Empfangsspulenanordnung aus zwei parallel zur Fläche der Sendespulenanordnung seitlich gegeneinander versetzten Einzelspulen besteht, insbesondere in einem Transpondersystem nach einem der Ansprüche 1 bis 9, dadurch gekennzeichnet, dass die beiden Einzelspulen der Empfangsspulenanordnung seitlich voneinander beabstandet angeordnet und elektrisch parallel geschaltet sind und bezüglich der Sendespulenanordnung so positioniert sind, dass im Empfangsignal das Sendesignal kompensiert ist.

11. Anordnung nach Anspruch 10, dadurch gekennzeichnet, dass die Sendespulenanordnung und die Empfangsspulenanordnung in Richtung der Flächennormalen gegeneinander versetzt angeordnet sind.

12. Anordnung nach Anspruch 10 oder 11, dadurch gekennzeichnet, dass die Abmessung der Antennenanordnung in Richtung der Verbindungslinie der Empfangsspulen wesentlich grösser ist als in einer Richtung senkrecht dazu und insbesondere wenigstens das 3-fache der Abmessung in der senkrechten Richtung beträgt.

13. Anordnung nach Anspruch 12, dadurch gekennzeichnet, dass der Durchmesser der Fläche der Sendespulenanordnung in einer zur Verbindungslinie der beiden Empfangsspulen parallelen Richtung wesentlich grösser ist als in der dazu senkrechten Flächenrichtung.

14. Anordnung nach einem der Ansprüche 10 bis 13, dadurch gekennzeichnet, dass die Empfangsspulenanordnung aus zwei Flachspulen mit untereinander und zur Sendespulenanordnung parallelen Spulenflächen besteht.

15. Anordnung nach Anspruch 14, dadurch gekennzeichnet, dass die Flächen der Einzelspulen der Empfangsspulenanordnung jeweils teilweise mit der Fläche der Sendespulenanordnung überlappen.

16. Anordnung nach einem der Ansprüche 10 bis 13, dadurch gekennzeichnet, dass die Empfangsspulenanordnung zwei Einzelspulen umfasst, deren Hauptmagnetfeldrichtungen untereinander parallel und zu der der Sendespulenanordnung orthogonal sind.

17. Anordnung nach Anspruch 16, dadurch gekennzeichnet, dass die Einzelspulen der Empfangsspulenanordnung Flachspulen mit gegenüber der Sendespule kleinen Spulenflächen sind.

18. Anordnung nach Anspruch 16 oder 17, dadurch gekennzeichnet, dass die die Einzelspulen innerhalb der Sendespule angeordnet sind.

19. Anordnung nach Anspruch 18, dadurch gekennzeichnet, dass die Einzelspulen aus einer Mittenebene der Spulenfläche der Sendespule in gleicher Richtung versetzt angeordnet sind.

20. Anordnung nach einem der Ansprüche 10 bis 19, dadurch gekennzeichnet, dass die Sendespule in geringem Abstand von einer metallischen Fläche angeordnet und mit ihrer Hauptmagnetfeldrichtung parallel zu dieser Fläche ausgerichtet ist und dass zwischen Sendespule und metallische Fläche eine flächige Abschirmvorrichtung mit weichmagnetischem, wirbelstromfreiem Material eingefügt ist.
